# EUROPÄISCHE PATENTSCHRIFT

(11) **EP 0 884 207 B1**
(45) Veröffentlichungstag und Bekanntmachung des Hinweises auf die Patenterteilung: **20.07.2005**
(21) Anmeldenummer: 98109714.0
(22) Anmeldetag: 28.05.1998
(51) Int. Cl.: B60J 7/12, B29C 70/84, B29C 65/00, B60J 10/10

(54) **Kraftfahrzeugverdeck**
Foldable vehicle top
Capote pliante pour véhicule

(30) Priorität: 11.06.1997 DE 19724592
(43) Veröffentlichungstag der Anmeldung: 16.12.1998
(73) Patentinhaber: PARAT Automotive Schönenbach GmbH + Co. KG, 42897 Remscheid (DE)
(72) Erfinder: Hartmann, Ludwig, 92286 Rieden (DE); Kastner, Rudolf, 92245 Kümmersbruck (DE)
(74) Vertreter: Patentanwälte Ostriga, Sonnet, Wirths & Roche

(56) Entgegenhaltungen:
- EP-A- 0 145 812
- DE-A- 4 040 173
- DE-A- 4 341 079
- DE-A- 6 901 084
- DE-C- 4 441 266
- DE-U- 9 206 366
- US-A- 3 028 194
- US-A- 3 672 078
- US-A- 6 015 181

## Beschreibung

Die Erfindung bezieht sich auf ein Kraftfahrzeugverdeck, bei dem ein Verdeckflächenelement mit einem anderen Konstruktionselement verbunden ist. Bei diesem anderen Konstruktionselement handelt es sich bspw. um ein zweites Verdeckflächenelement, das bislang mit dem ersten Verdeckflächenelement zusammengenäht wird. Als Beispiel sei US-PS 30 28 194, Fig. 2, genannt. Um die Nahtstelle abzudichten, wird ein solches Verdeck üblicherweise an der Innenseite im Nahtbereich z.B. mittels eines streichfähigen Dichtungsmaterials abgedichtet. Das Zusammennähen der Verdeckflächenelemente und das Abdichten derselben entlang der gemeinsamen Verbindungsnaht stellt einen nicht zu vernachlässigenden Aufwand dar.

Ein Kraftfahrzeugverdeck gemäß dem Oberbegriff von Anspruch 1 ist aus dem Document DE 92 06 366 U1 bekannt.

Der Erfindung liegt die Aufgabe zugrunde, ein Verdeck der oben genannten Art zu schaffen, das vergleichsweise einfach realisierbar ist.

Diese Aufgabe wird erfindungsgemäß dadurch gelöst , daß das andere Konstruktionselement von einem zweiten Verdeckflächenelement gebildet ist, und daß die beiden Verdeckflächenelemente miteinander mittels eines streifenförmigen Polyurethan(PUR)-Gießharz-Wulstelementes verbunden sind und daß die beiden Verdeckflächenelemente allein durch das PUR-Gießharz-Wulstelement mechanisch fest und dicht miteinander Verbunden sind.

Zur Realisierung eines derartigen erfindungsgemäß ausgebildeten Verdeckes ist es nur notwendig, die beiden Verdeckflächenelemente passend in ein geeignet ausgebildetes Werkzeug einzubringen, das Werkzeug dicht zu verschließen und in den im Werkzeug vorhandenen Formhohlraum das PUR-Gießharz einzubringen. Nach dem Reaktionsablauf des PUR-Gießharzes kann die Gießform geöffnet und das entsprechende Verdeck bzw. Verdeckteil aus dem Formwerkzeug entnommen werden. Ein Nähvorgang zum Verbinden der Verdeckflächenelemente und ein Streichvorgang zum Abdichten der Nahtstelle sind erfindungsgemäß also in vorteilhafter Weise nicht erforderlich. Ein weiterer Vorteil des erfindungsgemäß ausgebildeten Verdecks der oben genannten Art besteht darin, daß das Ergebnis der beschriebenen Arbeit, d.h. des Gießvorgangs, sehr sauber und jederzeit exakt reproduzierbar ist. Zur Realisierung des erfindungsgemäßen Verdecks der oben genannten Art ist in weiterer vorteilhafter Weise kein besonders qualifiziertes Personal erforderlich.

Bei einem erfindungsgemäß ausgebildeten Verdeck der oben genannten Art können die beiden Verdeckflächenelemente miteinander fluchtend vorgesehen sein. Desgleichen ist es möglich, daß das zweite Verdeckflächenelement vom ersten Verdeckflächenelement unter einem bestimmten Winkel wegsteht. Dieser Winkel kann bspw. ca. 90° betragen. In Abhängigkeit von den jeweiligen Gegebenheiten kann dieser Winkel jedoch auch jeden anderen bestimmten Wert besitzen.

Durch das streifenförmige PUR-Gießharz-Wulstelement ergibt sich eine feste Verbindung der jeweils zusammengehörenden Verdeckflächenelemente. Die Festigkeit der Verbindung zusammengehörender Verdeckflächenelemente ist in vorteilhafter Weise weiter verbessert, wenn bei einem Verdeck der oben genannten Art die einander zugewandten Ränder der beiden Verdeckflächenelemente voneinander beabstandet und mit Verankerungslöchern ausgebildet sind, wobei das PUR-Gießharz-Wulstelement die Ränder der Verdeckflächenelemente bis über die Verankerungslöcher überdeckt. Das PUR-Gießharz durchdringt hierbei die Verankerungslöcher, wodurch die mechanische Festigkeit der Verbindung der zusammengehörenden Verdeckflächenelemente entsprechend verbessert wird.

Bei einer bevorzugten Ausbildung des erfindungsgemäß ausgebildeten Verdecks bedeckt das PUR-Gießharz-Wulstelement die Ränder der beiden Verdeckflächenelemente beidseitig. Dabei kann das PUR-Gießharz-Wulstelement in bezug auf die Verdeckflächenelemente ein mindestens annähernd symmetrisches Querschnittsprofil aufweisen. Es ist jedoch auch möglich, daß das PUR-Gießharz-Wulstelement einseitig mit einer Scharnierrille ausgebildet ist, so daß sich ein nierenförmiges Querschnitts-Profil ergibt. Eine solche Ausbildung kommt insbes. dort zur Anwendung, wo es erwünscht ist, die miteinander verbundenen Verdeckflächenelemente einfach und exakt wunschgemäß zusammenfalten zu können.

Bei einem Verdeck der oben beschriebenen Art mit benachbarten Verdeckflächenelementen kann es zweckmäßig sein, wenn die Ränder der beiden Verdeckflächenelemente miteinander mittels eines streifenförmigen Verbindungselementes verbunden sind, das vom PUR-Gießharz-Wulstelement bedeckt ist. Dabei kann das streifenförmige Verbindungselement einseitig vom besagten Wulstelement bedeckt sein, so daß das Verbindungselement von der anderen Seite her sichtbar ist, es ist jedoch auch möglich, daß das Wulstelement das streifenförmige Verbindungselement beidseitig bedeckt, so daß das streifenförmige Verbindungselement unsichtbar ist.

Das streifenförmige Verbindungselement kann von einem Gewebe- oder Geflechtstreifen gebildet sein. Bei einem solchen Verbindungselement kann es sich bspw. um ein Glasfasergewebe, um ein Metallgeflecht o.dgl. handeln. Das streifenförmige Verbindungselement kann selbstverständlich auch als Netz gestaltet sein. Mit derartigen streifenförmigen Verbindungselementen, die mit den beiden Verdeckflächenelementen bspw. verklebt sein können, ist es möglich, eine Schwindung im Bereich der Verbindung der beiden Verdeckflächenelemente zu vermeiden. Beim Ablauf der Reaktion des PUR-Gießharzes ergibt sich nämlich eine Materialschrumpfung, d.h. Schwindung, die größenordnungsmäßig um 1 % betragen kann. Mit Hilfe des erwähnten streifenförmigen Verbindungselementes in Gestalt eines Gewebe- oder Geflechtstreifens ist es möglich, diese Schrumpfung zu eliminieren und somit eine Stabilisierung des PUR-Gießharz-Wulstelementes zu bewirken. Hierdurch kann bspw. eine unerwünschte Faltenbildung im Verbindungsbereich der beiden Verdeckflächenelemente vermieden werden. Die gleichen vorteilhaften Ergebnisse sind bspw. auch dadurch erzielbar, daß das streifenförmige Verbindungselement von einem Klammerstreifen oder von einem Gitterstreifen gebildet ist, von welchem mindestens einseitig Druckknöpfe wegstehen. Eine andere Möglichkeit besteht darin, daß das streifenförmige Verbindungselement von zwei miteinander verketteten Drahtschlaufen- oder Drahtwellen-Elementen gebildet ist.

Erfindungsgemäß ist es ferner möglich, daß die Ränder der Verdeckflächenelemente abwechselnd mit Verankerungslöchern und mit darin einsteckbaren Verankerungsorganen ausgebildet sind.

Die der Erfindung zugrundeliegende Aufgabe kann erfindungsgemäß auch dadurch gelöst werden, daß das andere Konstruktionselement als Dachrinne geformt ist, die als integrales Bestandteil eines mit dem Verdeckflächenelement verbundenen streifenförmigen PUR-Gießharz-Wulstelementes ausgebildet ist. Eine solche Verdeckausbildung weist den Vorteil auf, daß die besagte Dachrinne direkt und unmittelbar realisierbar ist, was unter Herstellungs- und daraus resultierenden Kostengesichtspunkten vorteilhaft ist.

Die erfindungsgemäße Aufgabe kann auch dadurch gelöst sein, daß das andere Konstruktionselement von einer Verdeckscheibe gebildet ist, die mit dem Verdeckflächenelement mittels eines streifenförmigen PUR-Gießharz-Wulstelementes verbunden ist. Dabei kann wunschgemäß jedes beliebige PUR-Gießharz-System einer bestimmten Härte bzw. Weichheit zur Anwendung gelangen. Bspw. besitzt das PUR-Gießharz-System eine Shore-Härte A von größenordnungsmäßig 60. Wunschgemäß kann das PUR-Gießharz-System passend eingefärbt sein und eine Lichtechtheit der Stufe 6 bis 7 nach DIN 75 202 besitzen.

Die Verdeck bzw. Heckscheibe des erfindungsgemäß ausgebildeten Verdecks kann in das PUR-Gießharz-Wulstelement eingeklebt oder mit diesem unmittelbar vergossen sein.

Eine weitere Möglichkeit besteht darin, daß das andere Konstruktionselement von einem Gestängeteil gebildet ist, das vom PUR-Gießharz-Wulstelement umschlossen ist.

Aus den oben beschriebenen Varianten ist ohne weiteres ersichtlich, daß erfindungsgemäß ein vollständiges Fahrzeug-Verdeck ohne Näharbeiten und ohne auf die Näharbeiten folgende Abdicht-Arbeiten einfach, preisgünstig und exakt bzw. reproduzierbar realisiert werden kann.

Erfindungsgemäß kann das PUR-Gießharz-Wulstelement in einem Einphasen-Gießverfahren hergestellt werden. Es ist jedoch auch möglich, das PUR-Gießharz-Wulstelement in einem Zweiphasen-Gießverfahren oder in einem Mehrphasenverfahren, d.h. in einem Formwerkzeug mit austauschbaren Formteilen bzw. Deckeln, zu realisieren. Das läßt in vorteilhafter Weise eine Vielzahl von Gestaltungsmöglichkeiten des Verdecks zu. Desweiteren ist es möglich, das PUR-Gießharz-Wulstelement als Flächenverstärkung oder als Flächenversteifung eines jeweiligen Verdeckflächenelementes zu gestalten. Auch dies ist bspw. in einem an sich bekannten Einphasen-Gießverfahren oder in einem an sich bekannten Zwei- oder Mehrphasen-Gießverfahren realisierbar. Bei diesen Gießverfahren können unterschiedliche Gießharze zur Anwendung kommen.

Weitere Einzelheiten und Vorteile des Erfindungsgegenstandes ergeben sich aus der nachfolgenden Beschreibung von in der Zeichnung schematisch, perspektivisch und geschnitten gezeichneten Ausführungsbeispielen diverser Verdeck-Varianten bzw. Abschnitte. Es zeigen:
- Fig. 1: eine erste Ausbildung des Verdecks geschnitten in einer räumlichen Darstellung,
- Fig. 2: in einer der Fig. 1 ähnlichen Darstellung des Verdecks geschnitten und abschnittweise eine zweite Ausführungsform,
- Fig. 3: geschnitten und abschnittweise eine dritte Ausführungsform des Verdecks,
- Fig. 4: geschnitten und perspektivisch eine vierte Ausbildung des Verdecks,
- Fig. 5: geschnitten und perspektivisch eine fünfte Ausbildung des Verdecks,
- Fig. 6: eine sechste Ausführungsform des Verdecks geschnitten in einer räumlichen Darstellung,
- Fig. 7: einen Abschnitt einer siebenten Ausbildung des Verdecks in einer perspektivischen, geschnittenen Darstellung,
- Fig. 8: eine achte Ausführungsform des Verdecks in einer den Fig. 1 bis 7 ähnlichen perspektivischen Darstellung,
- Fig. 9, 10: weitere Varianten des Verdecks in einer der Fig.8 ähnlichen Darstellung, nicht zur Erfindung gehörend
- Fig. 11: eine räumliche Darstellung eines geschnitten gezeichneten Abschnittes einer weiteren Ausführungsform des Verdecks,
- Fig. 12: eine perspektivische Darstellung eines Abschnittes einer weiteren Ausbildung des Verdecks in einer Schnittdarstellung,
- Fig. 13, 14: eine räumliche Explosionsdarstellung eines weiteren Beispiels des Verdecks, nicht zur Erfindung gehörend
- Fig. 15: eine räumliche Explosionsdarstellung noch einer anderen Ausbildung des Verdecks.

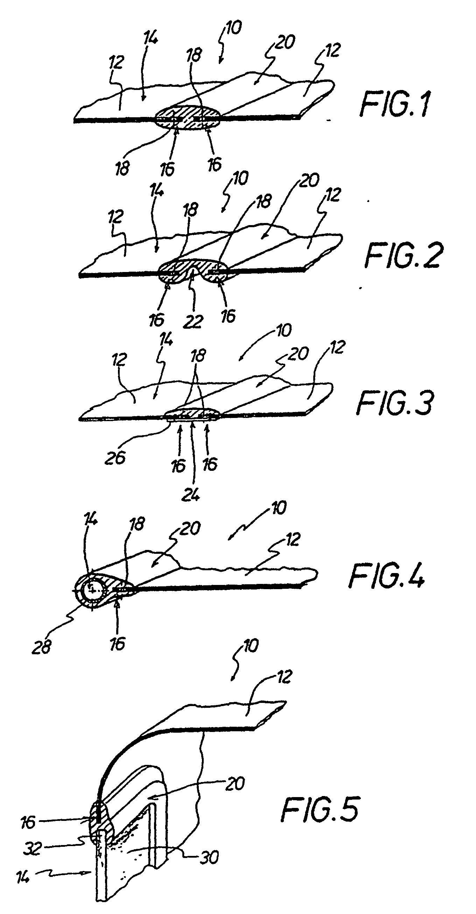

Fig. 1 zeigt abschnittweise und geschnitten eine erste Ausbildung des Verdecks 10 für ein Kraftfahrzeug, insbes. für ein Personenkraftfahrzeug, mit einem ersten Verdeckflächenelement 12 und mit einem anderen Konstruktionselement 14, das ebenfalls von einem Verdeckflächenelement 12 gebildet ist. Die beiden Verdeckflächenelemente 12 sind miteinander fluchtend vorgesehen. Die einander zugewandten Ränder 16 der beiden Verdeckflächenelemente 12 weisen voneinander einen kleinen Abstand auf und sind jeweils mit Verankerungslöchern 18 ausgebildet. Die Ränder 16 der Verdeckflächenelemente 12 können auch überlappend vorgesehen sein.

Die beiden Verdeckflächenelemente 12 sind miteinander mittels eines streifenförmigen PUR-Gießharz-Wulstelementes 20 mechanisch fest und abdichtend verbunden. Das PUR-Gießharz-Wulstelement überdeckt die Ränder 16 der Verdeckflächenelemente 12 bis über die Verankerungslöcher 18, es ist derartig ausgebildet, daß es in bezug auf die miteinander fluchtenden Verdeckelemente 12 ein mindestens annähernd symmetrisches Querschnittsprofil aufweist. Demgegenüber verdeutlicht die Fig.2 in einer der Fig. 1 ähnlichen Darstellung ein PUR-Gießharz-Wulstelement 20, das einseitig mit einer Scharnierrille 22 ausgebildet ist, so daß sich ein PUR-Gießharz-Wulstelement 20 mit einem nierenförmigen Querschnitts-Profil ergibt.

Gleiche Einzelheiten sind in Fig. 2 mit denselben Bezugsziffern wie Fig. 1 bezeichnet.

Fig. 3 zeigt abschnittweise ein Verdeck 10 mit einem ersten Verdeckflächenelement 12 und mit einem anderen, ebenfalls von einem Verdeckflächenelement 12 gebildeten Konstruktionselement 14, wobei die beiden Verdeckflächenelemente 12 miteinander fluchten und mittels eines streifenförmigen Verbindungselementes 24 verbunden sind. Das streifenförmige Verbindungselement 24 kann bspw. von einem textilen Gewebe 26 gebildet sein, das mit den Rändern 16 der beiden Verdeckflächenelemente 12 vernäht oder verklebt ist. Das streifenförmige Verbindungselement 24 ist an der Innenseite des Verdecks 10 vorgesehen. An der Außenseite des Verdecks 10 ist ein PUR-Gießharz-Wulstelement 20 vorgesehen, das die Ränder 16 der Verdeckflächenelemente 12 überdeckt. Die Ränder 16 sind auch bei der in Fig. 3 gezeichneten-Ausbildung des Verdecks 10 mit voneinander beabstandeten Verankerungslöchern 18 ausgebildet, die vom PUR-Gießharz-Wulstelement 20 überdeckt sind.

Fig. 4 verdeutlicht eine Ausbildung des Verdecks 10, bei welchem ein Verdeckflächenelement 12 mit einem anderen Konstruktionselement 14 kombiniert ist, das von einem Gestängeteil 28 des Verdecks 10 gebildet ist. Das Gestängeteil 28 ist mit dem Verdeckflächenelement 12 mittels eines PUR-Gießharz-Wulstelementes 20 mechanisch fest und dicht verbunden. Zu diesem Zwecke ist der Rand 16 des Verdeckflächenelementes 12 bspw. wiederum mit voneinander beabstandeten Verankerungslöcheren 18 ausgebildet, wobei das PUR-Gießharz-Wulstelement 20 den Rand 16 des Verdeckflächenelementes 12 so weit bedeckt, daß auch die Verankerungslöcher 18 vom PUR-Gießharz-Wulstelement 20 überdeckt sind.

Fig. 5 zeigt eine Ausbildung des Verdecks 10, wobei ein Verdeckflächenelement 12 mit einem anderen Konstruktionselement 14 kombiniert ist, das von einer Verdeck- bzw. Heckscheibe 30 gebildet ist. Die Verdeck- bzw. Heckscheibe 30 ist mit dem Verdeckflächenelement 12 mittels eines PUR-Gießharz-Wulstelementes 20 mechanisch fest und dicht verbunden, welches den Rand 16 des Verdeckflächenelementes 12 und den dazu benachbarten Rand 32 der Verdeck- bzw. Heckscheibe 30 beidseitig, d.h. innen- und außenseitig mechanisch fest und dicht einfaßt.

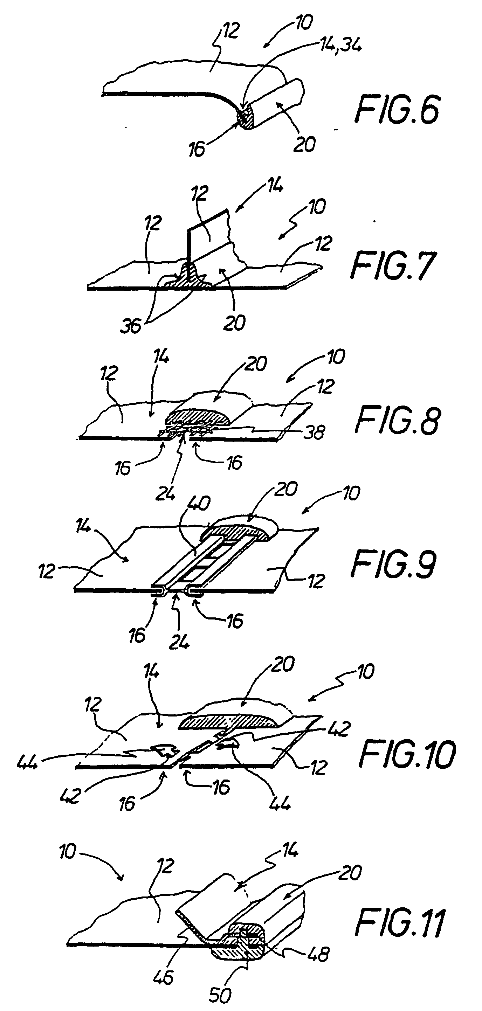

Fig. 6 verdeutlicht eine Ausführungsform des Verdecks 10, bei welchem ein Verdeckflächenelement 12 mit einer Dachrinne 34 direkt und unmittelbar kombiniert ist. Hierbei ist die Dachrinne 34 ein integrales Bestandteil eines länglichen streifenförmigen PUR-Gießharz-Wulstelementes 20, das am Rand 16 des Verdeckflächenelementes 12 mechanisch fest und abdichtend fixiert ist. Hierbei bildet also die besagte Dachrinne 34 das oben mehrfach erwähnte andere Konstruktionselement 14 des Verdecks 10.

Fig. 7 zeigt perspektivisch abschnittweise in einer Schnittdarstellung eine Ausbildung des Verdecks 10 mit einem Verdeckflächenelement 12, von welchem ein zweites Verdeckflächenelement 12, welches das besagte andere Konstruktionselement 14 des Verdecks 10, bildet unter einem Winkel von 90° wegsteht. Die beiden Verdeckflächenelemente 12 sind mittels eines PUR-Gießharz-Wulstelementes 20 mechanisch fest und abdichtend verbunden, das mit zwei Hohlkehlen 36 gestaltet ist.

Fig. 8 zeigt eine Ausbildung des Verdecks 10 mit zwei Verdeckflächenelementen 12 (ähnlich den Fig. 1, 2 und 3), wobei auf den zueinander benachbarten Rändern 16 der voneinander geringfügig beabstandeten Verdeckflächenelemente 12 ein streifenförmiges Verbindungselement 24 angebracht bzw. befestigt ist, das von einem Gewebe- oder Geflechtstreifen 38 gebildet ist. Der Gewebe- oder Geflechtstreifen 38 ist von einem PUR-Gießharz-Wulstelement 20 überdeckt, durch das die beiden Verdeckflächenelemente 12 miteinander fest und abdichtend verbunden sind. Durch den Gewebe- oder Geflechtstreifen 38 wird die durch Schrumpfung des PUR-Gießharz-Wulstelementes 20 in der Größenordnung um 1 % bedingte Schwindung eliminiert, so daß eine durch Schrumpfung des PUR-Gießharz-Wulstelementes 20 bedingte Faltenbildung entlang der Ränder 16 der beiden Verdeckelemente 12 auf einfache Weise zuverlässig verhindert wird. Das PUR-Gießharz-Wulstelement 20 kann die Ränder 16 der beiden Verdeckflächenelemente 12 einseitig oder vorzugsweise beidseitig geeignet überdecken.

Fig. 9 zeigt ein Beispiel eines Verdecks 10 abschnittweise in einer perspektivischen, aufgeschnittenen Darstellung, die sich von der in Fig. 8 gezeichneten Ausführungsform des Verdecks 10 insbes. dadurch unterscheidet, daß das streifenförmige Verbindungselement 24 zwischen den beiden Verdeckflächenelementen 12 von einem Klammerstreifen 40 bspw. aus einem geeigneten Kunststoffmaterial gebildet ist. Der Klammerstreifen 40 kann derartig gestaltet sein, daß auch hier eine Schwindung und somit eine Faltenbildung entlang den Rändern 16 der Verdeckflächenelemente 12 verhindert wird. Ein PUR-Gießharz-Wulstelement 20 bedeckt auch bei dieser Ausbildung des Verdecks 10 die Ränder 16 der Verdeckflächenelemente 12 sowie das die Ränder 16 miteinander koppelnde streifenförmige Verbindungselement 24 in Gestalt des quasi endlosen Klammerstreifens 40.

Fig. 10 zeigt ein weiteres Beispiel eines Verdecks 10, bei welchem die beiden Verdeckflächenelemente 12 entlang ihren einander zugewandten Rändern 16 abwechselnd mit Verankerungslöchern 42 und mit darin einsteckbaren Verankerungsorganen 44 ausgebildet sind, wobei die Verankerungsorgane 44 integrale Bestandteile der Verdeckflächenelemente 12 bilden können. Die Verdeckflächenelemente 12 sind auch bei dieser Ausbildung des Verdecks 10 mittels eines PUR-Gießharz-Wulstelementes 20 miteinander fest und abdichtend verbunden.

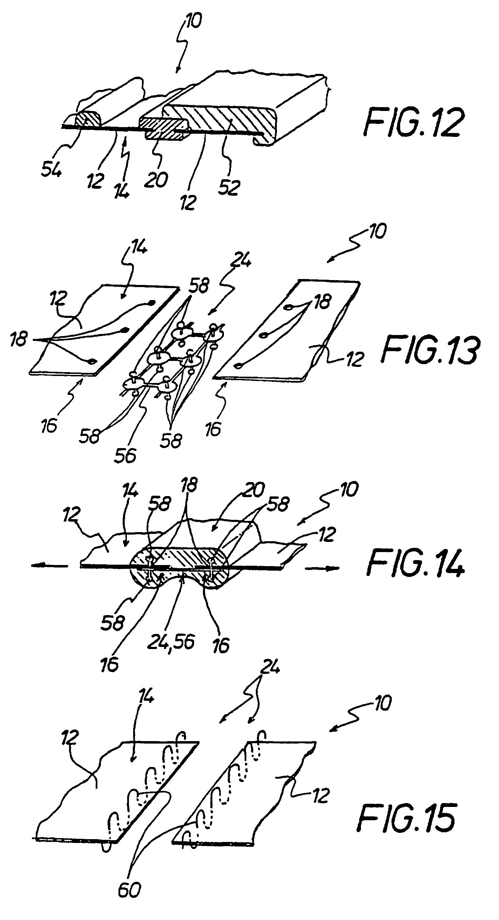

Fig. 11 verdeutlicht eine Ausführungsform des Verdecks 10, wobei ein Verdeckflächenelement 12 mit einem anderen Konstruktionselement 14 kombiniert, d.h. fest und abdichtend verbunden ist, das bspw. von einem Kunststoff-Befestigungsstreifen 46 gebildet ist. Das zuletzt genannte andere Konstruktionselement 14 kann bspw. auch Druckknöpfe, Schnapper, ein Klettband o.dgl. aufweisen. Es ist mit dem Verdeckflächenelement 12 in einem Zweikomponenten-Gießverfahren mechanisch fest und abdichtend verbunden, bei welchem nacheinander zwei entsprechende Gießformhälften bzw. -deckel zur Anwendung gelangen, um in einem ersten Formgebungsschritt eine erste Komponente 48 und unmittelbar anschließend im gleichen Gießformwerkzeug eine zweite Komponente 50 zu realisieren, die miteinander und mit dem Verdeckflächenelement 12 sowie dem anderen Konstruktionselement 14 mechanisch fest und dicht verbunden sind, und die miteinander ein PUR-Gießharz-Wulstelement 20 bilden.

Fig. 12 verdeutlicht in einer nicht maßstabsgerechten Darstellung abschnittweise eine Ausbildung des Verdecks 10 mit zwei miteinander fluchtenden Verdeckflächenelementen 12, die miteinander mittels eines PUR-Gießharz-Wulstelementes 20 mechanisch fest und abdichtend verbunden sind. Das auf der rechten Seite gezeichnete Verdeckflächenelement 12 ist mit einer PUR-Gießharz-Flächenverstärkung 52 und das auf der linken Seite abschnittweise gezeichnete Verdeckflächenelement 12 ist mit einer PUR-Gießharz-Flächenversteifung 54 versehen.

Die Fig. 13 und 14 zeigen ein weiteres Beispiel eines Verdecks 10 mit zwei miteinander fluchtenden Verdeckflächenelementen 12, die entlang ihren einander zugewandten Rändern 16 mit Verankerungslöchern 18 ausgebildet sind. Zur mechanischen Verbindung der Verdeckflächenelemente 12 ist ein streifenförmiges Verbindungselement 24 vorgesehen, das von einem Gitterstreifen 56 gebildet ist, von welchem beidseitig Druckknöpfe 58 wegstehen. Wie aus Fig. 14 ersichtlich ist, werden die oberseitigen Druckknöpfe 58 durch die Verankerungslöcher 18 an den Rändern 16 der beiden Verdeckflächenelemente 12 durchgesteckt, wonach die beiden Verdeckflächenelemente 12 die Ränder 16 überdeckend mit einem PUR-Gießharz-Wulstelement 20 mechanisch fest und abdichtend verbunden werden. Die unterseitig vom Gitterstreifen 56 wegstehenden Druckknöpfe 58 dienen insbes. zur festen Verankerung des Gitterstreifens 56 mit dem PUR-Gießharz-Wulstelement 20. Durch die nierenförmige Querschnittgestaltung des PUR-Gießharz-Wulstelementes 20 kann auch hier eine gewisse Scharnierwirkung erzielt werden.

Fig. 15 verdeutlicht schematisch zwei Verdeckflächenelemente 12 eines Verdecks 10, wobei das die Verdeckflächenelemente 12 miteinander verbindende streifenförmige Verbindungselement 24 von zwei Drahtschlaufen- oder Drahtwellen-Elementen 60 gebildet ist. In Fig. 15 sind die besagten Elemente 60 im nicht verketteten Zustand schematisch verdeutlicht. Zur Verbindung der beiden miteinander fluchtenden verdeckflächenelemente 12 sind die genannten Elemente 60 miteinander verkettet.

## Patentansprüche

1. Kraftfahrzeugverdeck, wobei ein erstes Verdeckflächenelement (12) mit einem anderen Konstruktionselement (14) unter Vermittlung eines PUR-Elements verbunden ist, **dadurch gekennzeichnet, dass** das andere Konstruktionselement (14) von einem zweiten Verdeckflächenelement (12) und das PUR-Element von einem streifenförmigen PUR-Gießharz-Wulstelement (20) gebildet ist, und dass des erste und das zweite Verdeckflächenelement (12) allein durch das PUR-Gießharz-Wulstelement (20) mechanisch fest und dicht miteinander verbunden sind.

2. Verdeck nach Anspruch 1,
**dadurch gekennzeichnet,**
**daß** die beiden Verdeckflächenelemente (12) miteinander fluchtend angeordnet sind.

3. Verdeck nach Anspruch 1,
**dadurch gekennzeichnet,**
**daß** das zweite Verdeckflächenelement (12) zum ersten Verdeckflächenelement (12) unter einem bestimmten Winkel angeordnet ist.

4. Verdeck nach Anspruch 1,
**dadurch gekennzeichnet,**
**daß** die einander zugewandten Ränder (16) der beiden Verdeckflächenelemente (12) voneinander beabstandet und mit Verankerungslöchern (18) ausgebildet sind, wobei das PUR-Gießharz-Wulstelement (20) die Ränder der Verdeckflächenelemente (12) bis über die Verankerungslöcher (18) überdeckt.

5. Verdeck nach Anspruch 1,
**dadurch gekennzeichnet,**
**daß** das PUR-Gießharz-Wulstelement (20) die Ränder (16) der beiden Verdeckflächenelemente (12) beidseitig bedeckt.

6. Verdeck nach Anspruch 5,
**dadurch gekennzeichnet,**
**daß** das PUR-Gießharz-Wulstelement (20) in bezug auf die Verdeckflächenelemente (12) ein mindestens annähernd symmetrisches Querschnittsprofil aufweist.

7. Verdeck nach Anspruch 5,
**dadurch gekennzeichnet,**
**daß** das PUR-Gießharz-Wulstelement (20) mindestens einseitig mit einer Scharnier-Rille (22) ausgebildet ist, so daß sich ein nierenförmiges Querschnitts-Profil ergibt.

8. Verdeck nach Anspruch 1,
**dadurch gekennzeichnet,**
**daß** die Ränder (16) der beiden Verdeckflächenelemente (12) miteinander mittels eines streifenförmigen Verbindungselementes (24) verbunden sind, das vom PUR-Gießharz-Wulstelement (20) bedeckt ist.

9. Verdeck nach Anspruch 8,
**dadurch gekennzeichnet,**
**daß** das streifenförmige Verbindungselement (24) von einem Gewebe- oder Geflechtstreifen (38) gebildet ist.

10. Verdeck nach Anspruch 8,
**dadurch gekennzeichnet,**
**daß** das streifenförmige Verbindungselement (24) von einem Gitterstreifen (56) gebildet ist, von welchem mindestens einseitig Druckknöpfe (58) wegstehen.

11. Verdeck nach Anspruch 8,
**dadurch gekennzeichnet,**
**daß** das streifenförmige Verbindungselement (24) von zwei miteinander verketteten Drahtschlaufen- oder Drahtwellen-Elementen (60) gebildet ist.

12. Verdeck gemäß dem Oberbegriff des Anspruchs 1,
**dadurch gekennzeichnet,**
**daß** das andere Konstruktionselement (14) als Dachrinne (34) geformt ist, die als integrales Bestandteil eines mit dem Verdeckflächenelement (12) verbundenen streifenförmigen PUR-Gießharz-Wulstelementes (20) ausgebildet ist.

13. Verdeck nach dem Oberbegriff des Anspruchs 1,
**dadurch gekennzeichnet,**
**daß** das andere Konstruktionselement (14) von einer Verdeck- bzw. Heckscheibe (30) gebildet ist, die mit dem Verdeckflächenelement (12) allein mittels eines streifenförmigen PUR-Gießharz-Wulstelementes (20) mechanisch fest und dicht verbunden ist.

14. Verdeck nach dem Oberbegriff des Anspruchs 1,
**dadurch gekennzeichnet,**
**daß** das andere Konstruktionselement (14) von einem Gestängeteil (28) gebildet ist, das von einem PUR-Gießharz-Wulstelement (20) umschlossen ist.

15. Verdeck nach einem der Ansprüche 1 bis 14,
**dadurch gekennzeichnet,**
**daß** das PUR-Gießharz-Wulstelement (20) in einem Zweikomponenten-Gießverfahren hergestellt ist.

16. Verdeck nach einem der Ansprüche 1 bis 15,
**dadurch gekennzeichnet,**
**daß** das PUR-Gießharz-Wulstelement (20) als Flächenverstärkung (52) oder als Flächenversteifung (54) ausgebildet ist.

## Claims

1. Motor vehicle convertible roof in which a first surface element (12) is joined to another structural element (14) with a PUR element as an intermediary agent, **characterised in that** the other structural element (14) is formed by a second surface element (12) and the PUR element is formed by a strip-shaped PUR cast resin bead element (20), and **in that** the first and second surface elements (12) are joined to one another in a mechanically strong and sealing manner solely by the PUR cast resin bead element (20).

2. Convertible roof according to claim 1, **characterised in that** the two surface elements (12) are disposed in mutually aligned relationship.

3. Convertible roof according to claim 1, **characterised in that** the second surface element (12) is disposed at a given angle to the first surface element (12).

4. Convertible roof according to claim 1, **characterised in that** the edges (16) facing towards one another of the two surface elements (12) are spaced from one another and are provided with anchoring holes (18), the PUR cast resin bead element (20) covering the edges of the surface elements (12) over a distance extending beyond the anchoring holes (18).

5. Convertible roof according to claim 1, **characterised in that** the PUR cast resin bead element (20) covers the edges (16) of the two surface elements (12) on both sides thereof.

6. Convertible roof according to claim 5, **characterised in that** the PUR cast resin bead element (20) has an at least approximately symmetrical cross-sectional profile in relation to the surface elements (12).

7. Convertible roof according to claim 5, **characterised in that** the PUR cast resin bead element (20) is provided on at least one side with a hinge groove (22), so that a reniform cross-sectional profile is produced.

8. Convertible roof according to claim 1, **characterised in that** the edges (16) of the two surface elements (12) are joined to one another by means of a strip-shaped connecting element (24) which is covered by the PUR cast resin bead element (20).

9. Convertible roof according to claim 8, **characterised in that** the strip-shaped connecting element (24) is formed by a woven or braided strip (38).

10. Convertible roof according to claim 8, **characterised in that** the strip-shaped connecting element (24) is formed by a lattice strip (56) from which snap fasteners (58) project on at least one side.

11. Convertible roof according to claim 8, **characterised in that** the strip-shaped connecting element (24) is formed by two interlinked looped or undulating wire elements (60).

12. Convertible roof according to the preamble of claim 1, **characterised in that** the other structural element (14) is formed as a roof gutter (34) which is formed as an integral part of a strip-shaped PUR cast resin bead element (20) connected to the surface element (12).

13. Convertible roof according to the preamble of claim 1, **characterised in that** the other structural element (14) is formed by a glass panel or rear window (30) which is joined in a mechanically strong and sealing manner to the surface element (12) solely by means of a strip-shaped PUR cast resin bead element (20).

14. Convertible roof according to the preamble of claim 1, **characterised in that** the other structural element (14) is formed by a frame linkage part (28) which is enclosed by a PUR cast resin bead element (20).

15. Convertible roof according to any one of claims 1 to 14, **characterised in that** the PUR cast resin bead element (20) is manufactured in a two-component casting process.

16. Convertible roof according to any one of claims 1 to 15, **characterised in that** the PUR cast resin bead element (20) is configured as a surface reinforcement (52) or as a surface stiffening element (54).

## Revendications

1. Capote pliante pour véhicule, où un premier élément de surface de capote pliante (12) est relié à un autre élément de construction (14), par l'intermédiaire d'un élément en PUR, **caractérisée en ce que** l'autre élément de construction (14) est formé par un deuxième élément de surface de capote pliante (12) et l'élément en PUR est formé par un élément formant bourrelet en résine coulée à base de PUR (20) en forme de bande, et **en ce que** le premier et le deuxième éléments de surface de capote pliante (12) sont reliés ensemble de façon mécaniquement rigide et étanche, uniquement par l'élément formant bourrelet en résine coulée à base de PUR (20).

2. Capote pliante selon la revendication 1, **caractérisée en ce que** les deux éléments de surface de capote pliante (12) sont disposés en alignement mutuel.

3. Capote pliante selon la revendication 1, **caractérisée en ce que** le deuxième élément de surface de capote pliante (12) est disposé sous un angle déterminé par rapport au premier élément de surface de capote pliante (12).

4. Capote pliante selon la revendication 1, **caractérisée en ce que** les bords (16), tournés l'un vers l'autre, des deux éléments de surface de capote pliante (12) sont espacés l'un de l'autre et réalisés avec des trous d'ancrage (18), l'élément formant bourrelet en résine coulée à base de PUR (20) recouvrant les bords des éléments de surface de capote pliante (12) jusqu'à dépasser les trous d'ancrage (18).

5. Capote pliante selon la revendication 1, **caractérisée en ce que** l'élément formant bourrelet en résine coulée à base de PUR (20) couvre sur les deux faces les bords (16) des deuxièmes éléments de surface de capote pliante (12).

6. Capote pliante selon la revendication 5, **caractérisée en ce que** l'élément formant bourrelet en résine coulée à base de PUR (20) présente un profil de section transversale au moins à peu près symétrique par rapport aux éléments de surface de capote pliante (12).

7. Capote pliante selon la revendication 5, **caractérisée en ce que** l'élément formant bourrelet en résine coulée à base de PUR (20) est réalisé, au moins sur un côté, avec une cannelure de formation de charnière (22), de manière à obtenir un profil de section transversale réniforme.

8. Capote pliante selon la revendication 1, **caractérisée en ce que** les bords (16) des deux éléments de surface de capote pliante (12) sont reliés ensemble à l'aide d'un élément de liaison (24) en forme de bande, couvert par l'élément formant bourrelet en résine coulée à base de PUR (20).

9. Capote pliante selon la revendication 8, **caractérisée en ce que** l'élément de liaison (24) en forme de bande est formé par une bande de textile ou de tricot (38).

10. Capote pliante selon la revendication 8, **caractérisée en ce que** l'élément de liaison (24) en forme de bande est formé par une bande de grillage (56) d'où des boutons-pression (58) s'écartent au moins sur un côté.

11. Capote pliante selon la revendication 8, **caractérisée en ce que** l'élément de liaison (24) en forme de bande est formé par deux éléments, en boucle de fil ou en ondulation de fil (60), enchaînés l'un à l'autre.

12. Capote pliante selon le préambule de la revendication 1, **caractérisée en ce que** l'autre élément de construction (14) est conformé en gouttière de toit (34), réalisé en tant que composant monobloc d'un élément formant bourrelet en résine coulée à base de PUR (20) en forme de bande, relié à l'élément de surface de capote pliante (12).

13. Capote pliante selon le préambule de la revendication 1, **caractérisée en ce que** l'autre élément de construction (14) est formé par un panneau ou vitre de capote pliante ou arrière (30), relié, de façon mécaniquement rigide et étanche, à l'élément de surface de capote pliante (12) seul, au moyen d'un élément formant bourrelet en résine coulée à base de PUR (20) en forme de bande.

14. Capote pliante selon le préambule de la revendication 1, **caractérisée en ce que** l'autre élément de construction (14) est formé par une partie de tringlerie (28), entourée par un élément formant bourrelet en résine coulée à base de PUR (20).

15. Capote pliante selon l'une des revendications 1 à 14, **caractérisée en ce que** l'élément formant bourrelet en résine coulée à base de PUR (20) est fabriqué selon un procédé de moulage à deux composants.

16. Capote pliante selon l'une des revendications 1 à 15, **caractérisée en ce que** l'élément formant bourrelet en résine coulée à base de PUR (20) est réalisé sous la forme de renforcement de surface (52) ou de rigidification de surface (54).
